# EUROPEAN PATENT APPLICATION

(11) **EP 3 382 553 A1**
(43) Date of publication of application: **03.10.2018**
(21) Application number: 18157347.8
(22) Date of filing: 19.02.2018
(51) Int. Cl.: G06F 11/30, G06F 11/34, G06F 9/50

(54) **METHOD EXECUTED BY A COMPUTER, INFORMATION PROCESSING APPARATUS AND PROGRAM**

(30) Priority: 31.03.2017 JP 2017072436
(71) Applicant: FUJITSU LIMITED, Kanagawa 211-8588 (JP)
(72) Inventor: Kukihara, Kensuke, Kanagawa, 211-8588 (JP); Nakano, Akihito, Kanagawa, 211-8588 (JP); Tanaka, Yuta, Kanagawa, 211-8588 (JP); Takeuchi, Susumu, Kanagawa, 211-8588 (JP); Kobune, Hiroyuki, Kanagawa, 211-8588 (JP)
(74) Representative: Hoffmann Eitle

(57) **Abstract**

A method includes receiving first information that indicates a plurality of functions provided in a first computing system, specifying a first linkage state of the plurality of functions in the first computing system and a first provision format of the plurality of functions in the first computing system, specifying a second linkage state of the plurality of functions in a second computing system and a second provision format of the plurality of functions in the second computing system, specifying a first performance determined based on the first linkage state, specifying a second performance determined based on the second linkage state, determining a first difference between the first performance and the second performance, specifying a third performance determined based on the first provision format, specifying a fourth performance determined based on the second provision format, determining a second difference between the third performance and the fourth performance.

## Description

### TECHNICAL FIELD

The embodiments discussed herein are related to a method executed by a computer, an information processing apparatus and a program.

### BACKGROUND ART

For migrating a server on a service providing environment to a cloud environment, there is a technique for assisting the migration, such as providing information on the performance of the destination and the cost of the migration.

One example of the technique for migration assistance is a technique of extracting a plurality of combinations of a computer-resource provision service and functions of the computer-resource provision service for use in implementing functions defined in a template and calculating performance index values for each combination.

Another technique is for identifying an easily cloud-enabled application find type and migrating thereto. In this technique, the infrastructures of a plurality of analyzing the infrastructures of a plurality of existing applications of the entity to select at least one infrastructure to migrate to the cloud. Examples of related art documents are Japanese Laid-open Patent Publication No. 2015-166963, Japanese National Publication of International Patent Application No. 2014-532247, and Japanese Laid-open Patent Publication No. 2016-35642.

### SUMMARY

### [TECHNICAL PROBLEM]

The above related arts are techniques for assisting migration between on-pre (on-premise environment) and Infrastructure as a Service (IaaS) and between IaaS and IaaS. A technique for assisting migration between Platform as a Service (PaaS) and Software as a Service (SaaS) has not been provided.

In PaaS or SaaS, new functions are added one after another. However, there is a limit to doing human-based examination every time a new function is released.

In particular, at the time of migration to PaaS, the server is divided for each function of the system, so that the configuration pattern may be complicated. Furthermore, information on the infrastructure of PaaS may not be checked on the user side. Thus, it is not easy for the user considering migration to PaaS to ascertain the effects on the performance and cost effect.

### [SOLUTION TO PROBLEM]

According to an aspect of the invention, a method executed by a computer, the method includes receiving first information that indicates a plurality of functions provided in a first computing system when the plurality of functions are migrated from the first computing system to a second computing system, specifying a first linkage state of the plurality of functions in the first computing system and a first provision format of the plurality of functions in the first computing system, specifying a second linkage state of the plurality of functions in the second computing system and a second provision format of the plurality of functions in the second computing system, specifying a first performance determined based on the first linkage state, the first performance being performance of the plurality of functions in the first computing system, specifying a second performance determined based on the second linkage state, the second performance being performance of the plurality of functions in the second computing system, determining a first difference between the first performance and the second performance, specifying a third performance determined based on the first provision format, the third performance being performance of the plurality of functions in the first computing system, specifying a fourth performance determined based on the second provision format, the fourth performance being performance of the plurality of functions in the second computing system, determining a second difference between the third performance and the fourth performance, and outputting at least one of the first difference and the second difference.

### [ADVANTAGEOUS EFFECTS OF INVENTION]

In one aspect, the embodiments have the effect of assisting migration to a platform in a cloud environment.

### BRIEF DESCRIPTION OF DRAWINGS

FIG. 1 is a diagram illustrating an example of the configuration of a migration source environment and the configuration of PaaS in a destination cloud environment;
FIG. 2 is a diagram illustrating an example of an infrastructure providing service and an API providing service of an embodiment;
FIG. 3 is a block diagram illustrating, in outline, the configuration of a migration assist system according to an embodiment of the present disclosure;
FIG. 4 is a functional block diagram of a platform migration assisting apparatus according to an embodiment of the present disclosure;
FIG. 5 is a diagram illustrating an example of a screen image of an input screen;
FIG. 6 is a diagram illustrating an example of a screen image of an input screen;
FIG. 7 is a diagram illustrating an example of a screen image of an input screen;
FIG. 8 is a diagram illustrating an example of a screen image of an input screen;
FIG. 9 is a diagram illustrating an example of a screen image of an input screen;
FIG. 10 is a diagram illustrating an example of a screen image of an input screen;
FIG. 11 is a diagram illustrating an example of a screen image of an input screen;
FIG. 12 is a diagram illustrating an example of a screen image of an input screen;
FIG. 13 is a diagram illustrating an example of a performance information DB;
FIG. 14 is a diagram illustrating an example of a migration information DB;
FIG. 15 is a diagram illustrating an example of a catalog information DB;
FIG. 16 is a diagram illustrating an example of the configuration of migration source information on a migration source environment and a destination cloud environment;
FIG. 17 is a diagram illustrating an example of calculation of a difference in performance of functions;
FIG. 18 is a diagram illustrating an example of calculation of financial cost;
FIG. 19 is a diagram illustrating an example of a screen image of simulation result;
FIG. 20 is a block diagram illustrating, in outline, the configuration of a computer that functions as a platform migration assisting apparatus; and
FIG. 21 is a flowchart illustrating an example of a platform migration assisting process.

### DESCRIPTION OF EMBODIMENTS

Embodiments of the present disclosure will be described in detail hereinbelow with reference to the drawings.

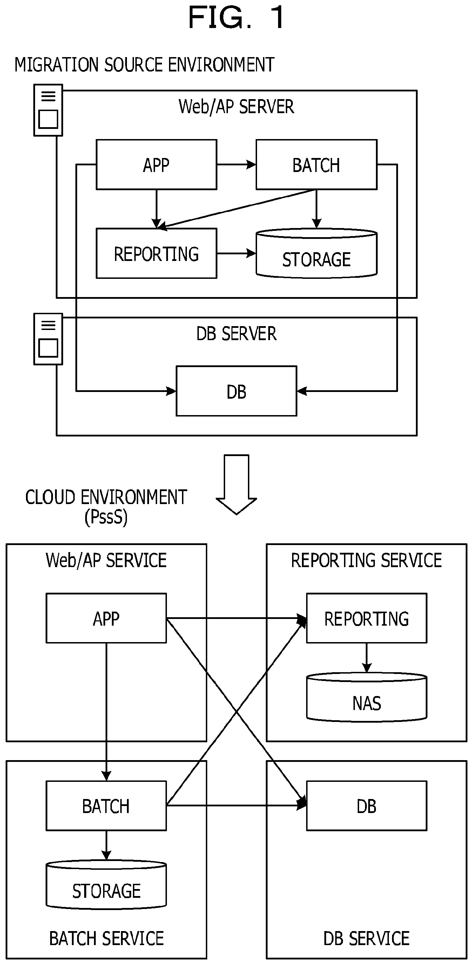

Since a migration source environment, such as on-premise, and Platform as a Service (PaaS) of migration destination have different system configurations, performance and cost differ. For example, as illustrated in FIG. 1, the system of the migration source environment includes two servers, a Web and application (AP) server and a DB server. The Web and AP server has the functions of application (hereinafter sometimes abbreviated as "app"), batch, reporting, and storage. The DB server has the function of database (DB). In contrast, in the cloud environment of the migration destination, the system of PaaS may include four services, a Web and AP service, a batch service, a reporting service, and a DB service, each having its function. For the migration to the cloud environment including PaaS, it is desirable to ascertain differences in performance and cost due to such a difference in system configuration.

The embodiments of the present disclosure provide a mechanism for easily checking effects on performance and cost when migrating to PaaS by the user inputting information on the migration source environment.

The mechanism is configured to store performance information collected from the platforms of PaaS and IaaS (Infrastructure as a Service) running on a plurality of cloud environments in a performance information DB. Operating costs of the platforms are also stored in a catalog information DB.

The input migration source environment and the information in the performance information DB, the migration information DB, and the catalog information DB are compared, to simulate changes in performance and costs, and the simulation results are output to a screen.

In the present embodiments, a mechanism for assisting migration of a Web and AP service, a batch infrastructure service, a DB service, and a reporting service of the services operated in the on-premise environment to PaaS will be described.

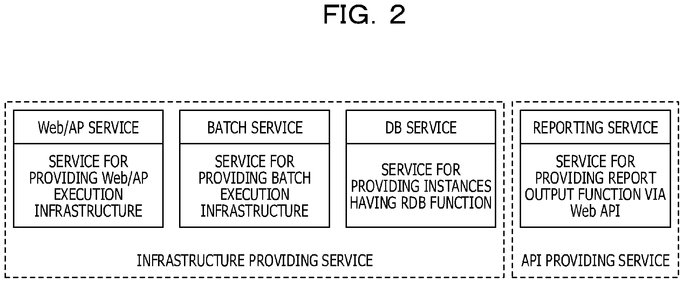

As illustrated in FIG. 2, among the services, the Web and AP service, the batch infrastructure service, and the DB service are infrastructure providing services. The reporting service is an application programming interface (API) providing service.

The Web and AP service is a service for providing a Web and AP execution infrastructure. The batch service is a service for providing a batch execution infrastructure. The DB service is a service for providing instances having a relational database (RDB) function. The reporting service is a service that provides a report output function using Web API.

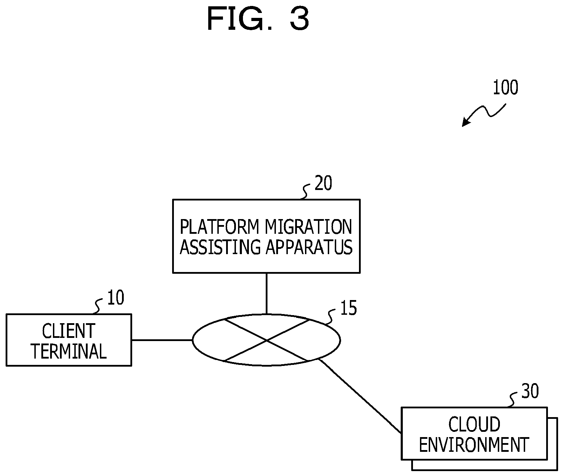

As illustrated in FIG. 3, a platform migration assist system 100 according to an embodiment includes a client terminal 10, a platform migration assisting apparatus 20, and cloud environments 30. The client terminal 10 is connected to the platform migration assisting apparatus 20 and the cloud environments 30 over a network 15, such as the Internet.

The client terminal 10 is an information processing terminal that the user of the platform migration assist system 100 uses. The client terminal 10 displays a migration source information input screen to receive an input of migration source information from the user. Specific input items are described later. Examples of the client terminal 10 include a notebook personal computer (PC) and a tablet terminal.

The platform migration assisting apparatus 20 is an apparatus that receives migration source information on the migration source environment from the client terminal 10 and performs simulations on the performance and the cost of migration to platforms including PaaS in the cloud environments 30. The platform migration assisting apparatus 20 provides migration assistance to the user by outputting the results of the simulations to the client terminal 10. The platform migration assisting apparatus 20 also acquires performance information, migration information, and catalog information on the cloud environments 30 for the simulations. The platform migration assisting apparatus 20 is an example of the evaluation processing apparatus.

Each cloud environment 30 is a cloud environment in which a platform including IaaS or PaaS operates. In the cloud environments 30, for a reporting service operating on PaaS, the measured value of a report output time is acquired from a report output execution log as reporting-service-performance information, and the average value is calculated and stored. In the cloud environments 30, verification instances are created for each region where PaaS runs and each service provided by PaaS, and inter-service communication performance is regularly measured. The average value of the measured values are calculated and stored for each combination of a region and a service. Furthermore, a middleware migration cost and a cost incurred when the cloud service is used are stored. Information that the platform migration assisting apparatus 20 acquires from the cloud environments 30 and stores will be described later.

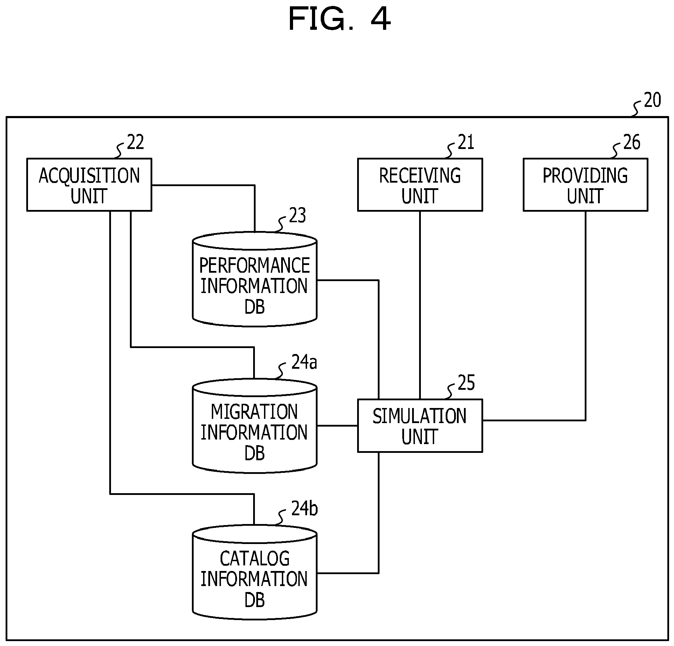

As illustrated in FIG. 4, the platform migration assisting apparatus 20 includes a receiving unit 21, an acquisition unit 22, a performance information DB 23, a migration information DB 24a, a catalog information DB 24b, a simulation unit 25, and a providing unit 26 in terms of function.

The receiving unit 21 receives migration source information that the user inputs on the input screen of the client terminal 10.

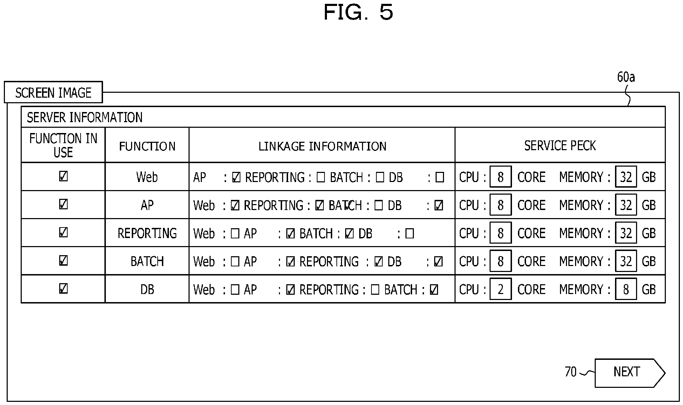

FIGs. 5 to 12 illustrate examples of a screen image of the input screen that presents input items of the migration source information. The input screen may be presented on the client terminal 10 by the providing unit 26 or may be downloaded to the client terminal 10 in advance.

The input screen illustrated in FIG. 5 includes an input-item area 60a and a button 70.

As illustrated in FIG. 5, the input-item area 60a receives, as server information, inputs of whether the functions are used (Function in Use), function linkage information, and the server specification of the servers having the functions. Hereinafter, an example in which the functions include Web, AP, reporting, batch, and DB will be described. "Function in Use" is input in a check box format in which whether the function is used at the migration source can be selected. "Linkage Information" is input in a check box format in which a linked function can be selected. "Server Specification" is input in a format in which the number of cores of the CPU and the value of memory capacity (in GB) can be input. The user inputs the input items in the input-item area 60a and then presses the button 70 to shift to the next input screen. The function linkage information is an example of the function linkage state of the migration source system.

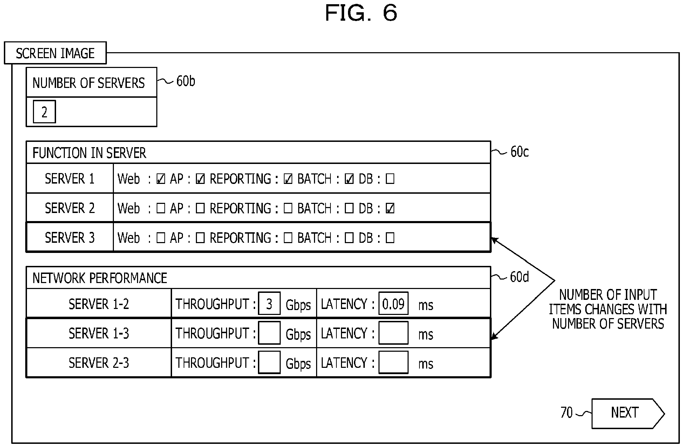

The input screen illustrated in FIG. 6 includes input-item areas 60b to 60d and the button 70.

As illustrated in FIG. 6, the input-item area 60b receives an input of the number of servers, the input-item area 60c receives an input of functions in each server, and the input-item area 60d receives an input of network performance between the servers. The input-item area 60b has a format in which the number of servers can be input. The input-item area 60c has a check box format in which Web, AP, reporting, batch, and DB can be selected as functions in each server. The input-item area 60d has a format in which the throughput between the servers (in Gbps [gigabits per second]) and latency (in milliseconds) as network performance between the servers.

The numbers of the input items of the input-item area 60c and the input-item area 60d increase or decrease depending on the input number of servers. The thick frame parts in FIG. 6 are input items that appear when the number of servers is set to 3. Thus, the number of input items can increase according to the configuration of the migration source environment.

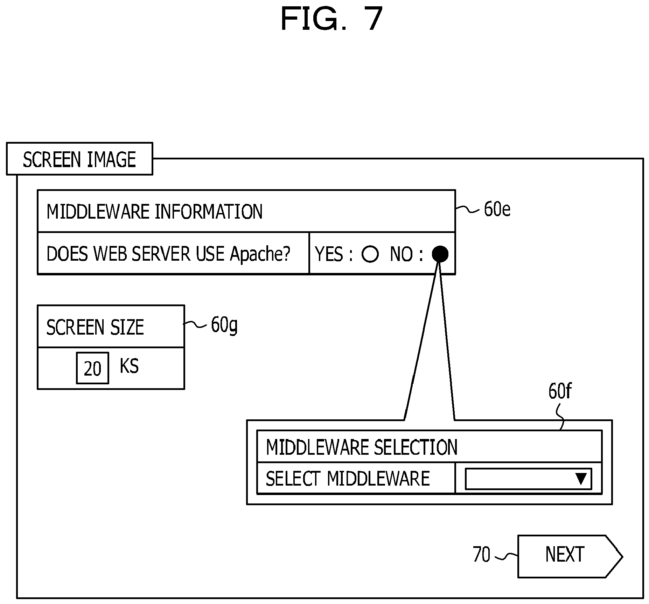

The input screen illustrated in FIG. 7 is an input screen displayed when Web is selected at Function in Use in the input-item area 60a and includes input-item areas 60e to 60g and the button 70.

As illustrated in FIG. 7, the input-item area 60e receives an input of middleware information, the input-item area 60f receives an input of middleware selection for the Web server, and the input-item area 60g receives an input of screen size. "Middleware Information" in the input-item area 60e is input in a format in which whether the Web server uses Apache can be selected with "Yes" or "No". The input-item area 60f is an input item that appears when "No" is selected in the input-item area 60e and has a format in which "Kind of Web Server" and "Another" can be selected as drop-down options. "Kind of Web Server" is the kind of middleware for Web before migration in "middleware migration cost table" in the migration information DB 24a, described later. "Screen Size" in the input-item area 60g is the length of the source code of the Web server, which is input in a format in which it can be entered as a numeric value expressed in KS (kilo step). The target of middleware information to be checked is an example of middleware used in the destination cloud environment, which also applies to the following.

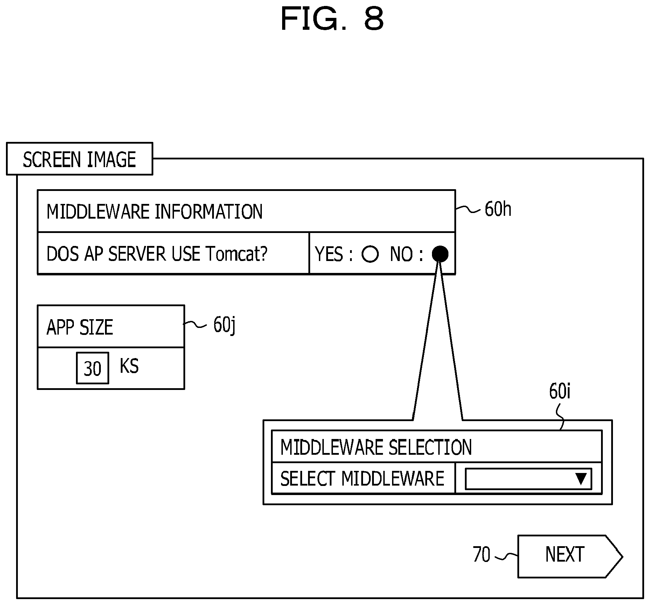

The input screen illustrated in FIG. 8 is an input screen displayed when AP is selected at Function in Use in the input-item area 60a and includes an input-item areas 60h to 60j and the button 70.

As illustrated in FIG. 8, the input-item area 60h receives an input of middleware information of the AP server, the input-item area 60i receives an input of middleware selection, and the input-item area 60j receives an input of application size. "Middleware Information" in the input-item area 60h is input in a format in which whether the AP server uses Tomcat can be selected with "Yes" or "No". The input-item area 60i is an input item that appears when "No" is selected in the input-item area 60h and has a format in which "Kind of AP Server" and "Another" can be selected as drop-down options. "Kind of AP Server" is the kind of middleware for AP before migration in "middleware migration cost table" in the migration information DB 24a, described later. "App Size" in the input-item area 60j is the length of the source code of the AP server, which is input in a format in which it can be entered as a numerical value expressed in KS (kilo step).

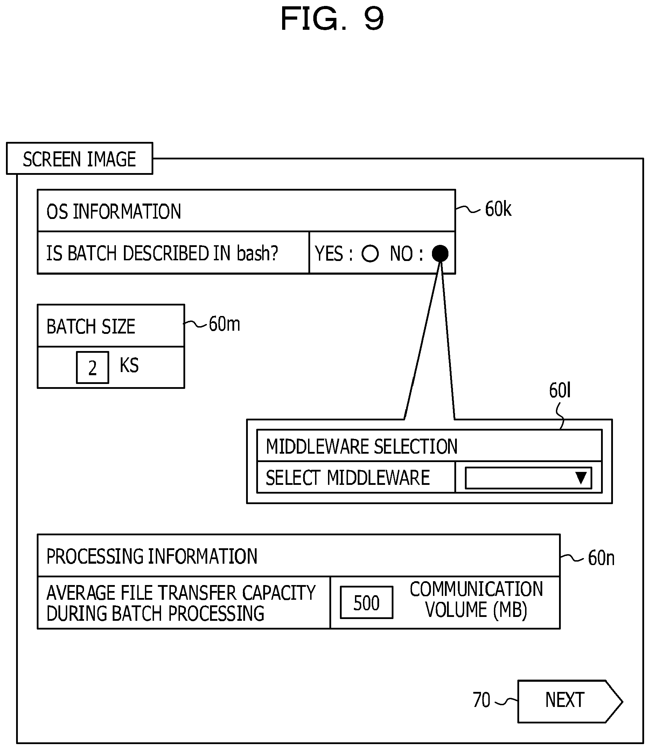

The input screen illustrated in FIG. 9 is an input screen displayed when batch is selected at Function in Use in the input-item area 60a and includes input-item areas 60k to 60n and the button 70.

As illustrated in FIG. 9, the input-item area 60k receives an input of OS information on batch, the input-item area 60l receives an input of middleware selection, the input-item area 60m receives an input of batch size, and the input-item area 60n receives an input of processing information. "OS Information" on batch in the input-item area 60k is information whether batch uses bash, which is input in a format in which it can be selected with "Yes" or "No". The input-item area 60l is an input item that appears when "No" is selected in the input-item area 60k and has a format in which "Kind of Batch Server" and "Another" can be selected as drop-down options. "Kind of batch Server" is the kind of middleware for batch before migration in middleware migration cost table" in the migration information DB 24a, described later. "Batch Size" in the input-item area 60m is the length of the source code of the batch server, which is input in a format in which it can be entered as a numerical value expressed in KS (kilo step). "Processing Information" in the input-item area 60n is the average file transfer capacity in batch processing, which is input in a format in which it can be entered as a numerical value expressed in units of communication volume (MB).

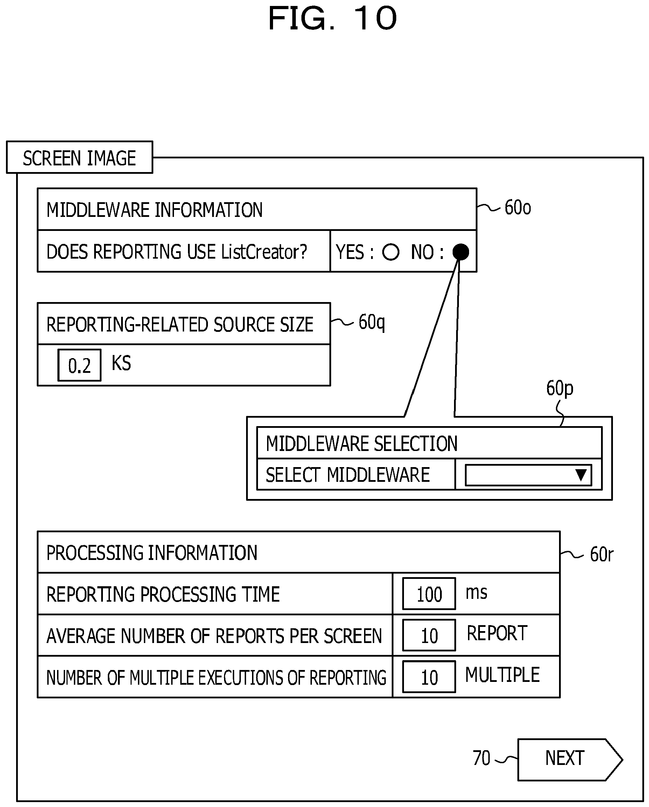

The input screen illustrated in FIG. 10 is an input screen displayed when reporting is selected at "Function in Use" in the input-item area 60a and includes input-item areas 60o to 60r and the button 70.

As illustrated in FIG. 10, the input-item area 60o receives an input of middleware information on reporting, the input-item area 60p receives an input of middleware selection, the input-item area 60q receives an input of reporting-related source size, and the input-item area 60r receives an input of processing information. "Middleware Information" in the input-item area 60o is whether List Creator is used in reporting, which is input in a format in which it can be selected with "Yes" or "No". The input-item area 60p is an input item that appears when "No" is selected in the input-item area 60o and has a format in which "Kind of Reporting Server" and "Another" can be selected as drop-down options. "Kind of Reporting Server" includes the kind of middleware for reporting before migration in "middleware migration cost table" in the migration information DB 24a, described later. "Reporting-Related Source Size" in the input-item area 60q is the length of the source code of the reporting server, which is input in a format in which it can be entered as a numerical value expressed in KS (kilo step). "Processing Information" in the input-item area 60r is input in a format in which a numerical value in milliseconds of reporting processing time, the average number of reports per screen, and the number of multiple executions of reporting can be entered. "Processing Information" in the input-item area 60n is an example of a provision format for the function of reporting in the migration source system.

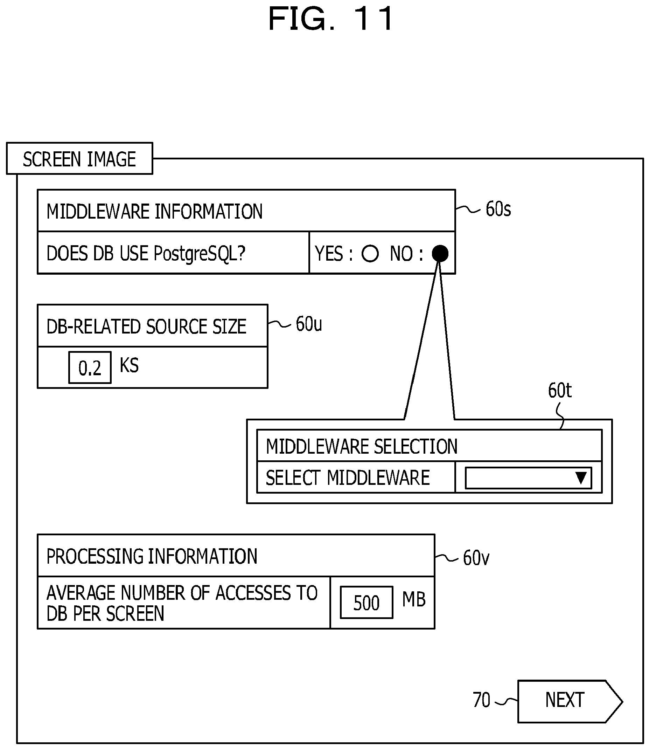

The input screen illustrated in FIG. 11 is an input screen displayed when DB is selected at Function in Use in the input-item area 60a and includes input-item areas 60s to 60v and the button 70.

AS illustrated in FIG. 11, the input-item area 60s receives an input of middleware information on DB, the input-item area 60t receives an input of middleware selection, the input-item area 60u receives an input of DB-related source size, and the input-item area 60v receives an input of processing information. "Middleware Information" on DB in the input-item area 60s is whether the DB uses PostgreSQL, which is input in a format in which it can be selected with "Yes" or "No". The input-item area 60t is an input item that appears when "No" is selected in the input-item area 60s and has a format in which "Kind of DB Server" and "Another" can be selected as drop-down options. "Kind of DB Server" is the kind of middleware for DB before migration in "middleware migration cost table" in the migration information DB 24a. "DB-related Source Size" in the input-item area 60u is the length of the source code of the DB server, which is input in a format in which it can be entered as a numerical value expressed in KS (kilo step). "Processing Information" in the input-item area 60v is input in a format in which the average number of accesses to DB per screen in MB can be entered.

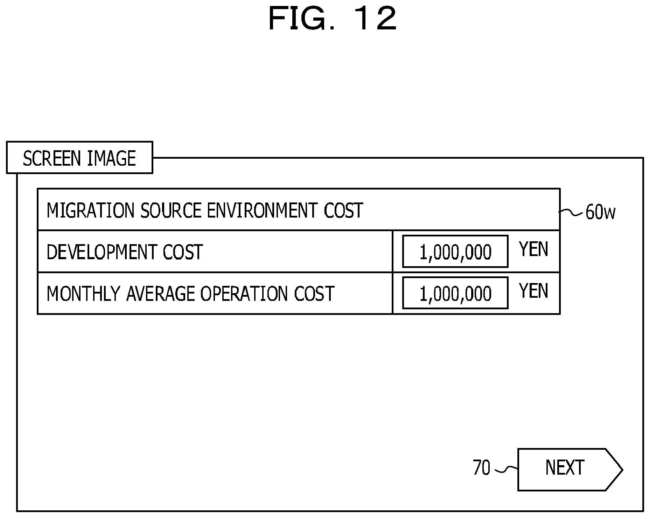

The input screen illustrated in FIG. 12 includes an input-item area 60w and the button 70. As illustrated in FIG. 12, the input-item area 60w receives an input of migration source environment cost. "Migration Source Environment Cost" in the input-item area 60w is input in a format in which the development cost and the monthly average operation cost of the migration source environment can be entered as a numerical value expressed in units of ten thousand yen.

The above is the input items on the input screen for the migration source information to be receives by the receiving unit 21.

Next, information stored in the performance information DB 23, the migration information DB 24a, and the catalog information DB 24b will be described. The "function" in the input items corresponds to the following "service".

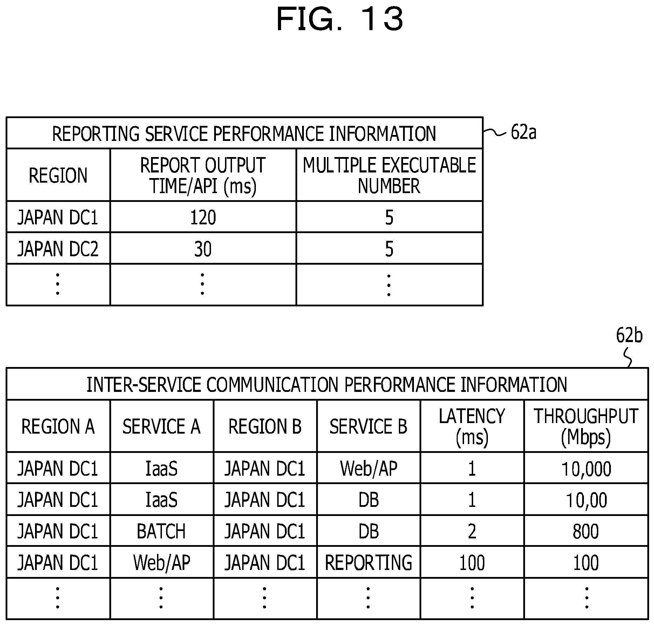

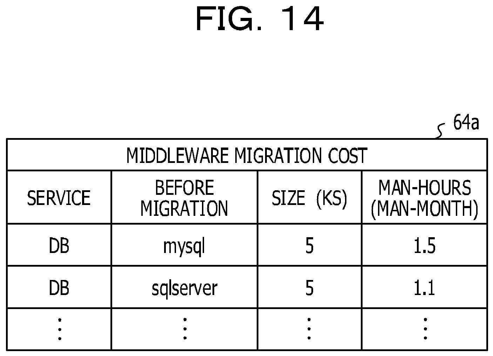

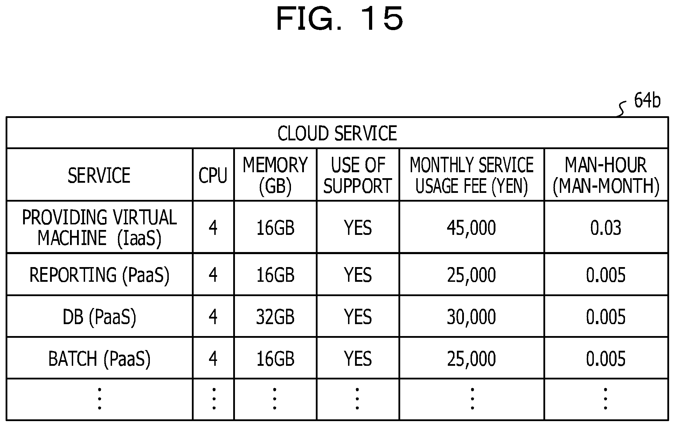

The acquisition unit 22 regularly acquires reporting service performance information and inter-service communication performance from the cloud environments 30 and stores the information as reporting service performance information 62a and inter-service communication performance information 62b in the performance information DB 23 illustrated in FIG. 13. The acquisition unit 22 also regularly acquires middleware migration cost and cloud service usage fees from the cloud environments 30. The acquired information is stored as middleware migration cost 64a in the migration information DB 24a illustrated in FIG. 14 and as cloud service usage fee 64b in the catalog information DB 24b illustrated in FIG. 15.

As illustrated in FIG. 13, the performance information DB 23 includes the reporting service performance information 62a and the inter-service communication performance information 62b which are acquired from the cloud environments 30 and stored by the acquisition unit 22. The reporting service performance information 62a includes the region (the location of a data center where the server is located) of each cloud environment 30, the report output time of API (in milliseconds), and multiple executable number. The report output time of API is an average value of actual measurement values obtained from the execution log of each cloud environment 30. The multiple execution number is an upper limit defined by the specification of the reporting function of the cloud environment 30. For example, in FIG. 13, Japan DC1 is stored in Region, 120 is stored in report output time, and 5 is stored in multiple executable number in the first record of the reporting service performance information 62a. The inter-service communication performance information 62b includes regions, latency (in milliseconds) of a combination of services, and throughput (in Mbps). For example, in FIG. 13, a combination of Japan DC1 in Region A, IaaS of service A in Region A, Japan DC1 in in Region B, and Web and AP of service B in Region B are stored in the first record of the inter-service communication performance information 62b, the latency of this combination is one millisecond, and the throughput of this combination is 10,000 Mbps.

The performance information DB 23 defines the table only for an API providing service and defines no table for infrastructure providing services in the reporting service performance information 62a. This is because the infrastructure providing services can be designed so as not to exert almost no effect on performance by aligning the number of CPUs and memory capacities before and after migration. The reporting service performance information 62a is an example of a provision format in a platform for the reporting function built in the cloud. The inter-service communication performance information 62b is an example of the function linkage state of the platform built in the cloud.

As illustrated in FIG. 14, the migration information DB 24a includes the middleware migration cost 64a which is acquired from each cloud environment 30 and stored by the acquisition unit 22. The middleware migration cost 64a includes the kind of service, the kind of middleware of the service before migration, the size of the source code of the service (in kilo step [KS], and man-hours for the migration (in man-month). For example, in FIG. 14, DB in Service, mysql in the kind of middleware of the DB before migration, 5 KS in Size, and 1.5 man-month in Man-Hours are stored in the first record of the middleware migration cost 64a.

"Man-Hour" in the middleware migration cost 64a is a value obtained by calculating the average value of actual migration cost per source size. For the calculation, the value in KS (kilo step) of the source code is rounded off to the first decimal place, and it is summarized in one record. For example, the average value of the actual values from 0.5 KS to 1.4 KS is stored as a record of size 1 KS.

As illustrated in FIG. 15, the catalog information DB 24b includes the cloud service usage fee 64b. The cloud service usage fee 64b includes the kind of service, the number of cores of the CPU of the service, the memory capacity of the service (in GB), whether to use support, monthly service usage fee (in Yen), and man-hour (in man-month). For example, in FIG. 15, Providing Virtual Machine (for example, CentOS) for IaaS in Service, 4 in the number of cores of the CPU, 16 GB in Memory, Yes in Use of Support, 45,000 in Monthly Service Usage Fee (in Yen), and 0.03 in Man-Hour (in man-month) are stored in the first record of the cloud service usage fee 64b.

"Monthly Service Usage Fee" in the cloud service usage fee 64b is a monthly usage fee defined as a cloud service. For example, this is a usage fee given by license fee and support fee per month + usage fee per month x 24 hours x 30 days. "Operating Man-Hour" is the average of the actual values of past operation items for man-hours for managing the service in use. The operation items include OS update, backup, and operation monitoring in IaaS, and backup and operation monitoring in PaaS.

The simulation unit 25 specifies the function provision format of the system of the migration source and the function provision format after migration based on the migration source information received by the receiving unit 21 and the reporting service performance information 62a and the inter-service communication performance information 62b in the performance information DB 23. The simulation unit 25 compares the difference between the specified function provision formats for each combination of functions to calculate the difference between the performances of the functions. The simulation unit 25 also calculates the difference between the performances of the functions based on the difference in linkage state for each combination of functions. The simulation unit 25 also calculates a cost for each combination of functions based on the migration source information, the middleware migration cost 64a in the migration information DB 24a, and the cloud service usage fee 64b in the catalog information DB 24b. The function provision format for the system of the migration source is specified from the migration source information input from the input screen. For example, in the example of "Function in Server" input in the input-item area 60c of FIG. 6, Server 1 has the functions of Web, AP, batch, and reporting, and Server 2 has the function of DB. As the function provision format for the system of the migration source, for example, processing information input in the input-item area 60r is specified for the function of reporting. Specifically, reporting processing time, the average number of reports per screen, and the number of multiple executions of reporting are specified. As the function provision format of the platform in the cloud environment after migration, for example, report output time and multiple executable number of the reporting service performance information 62a in the performance information DB 23 are specified for the function of reporting.

A specific calculation example will be described below.

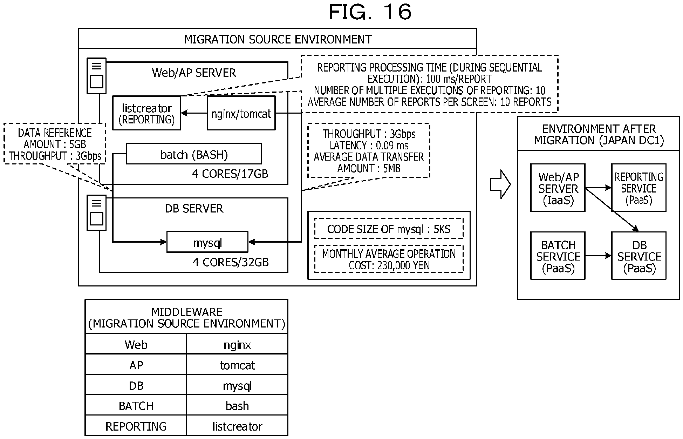

As illustrated in FIG. 16, migration source environment is constituted by a Web and AP server and a DB server. Functions of Web, AP, batch, and reporting are operating on the Web and AP server, and the function of DB is operating on the DB server. A case where the function of Web and AP is provided on the IaaS server and the functions of reporting, batch, and DB are provided as services of PaaS will be described by way of example. In the following description, it is assumed that the information illustrated in FIG. 16 is input from the individual input items on the input screen. For function linkage information, it is assumed that Web and AP link to reporting and DB, and batch links to DB. Web and AP are treated as one unit.

First, an example of calculating the difference in the performance of the function of reporting. As illustrated in FIG. 16, in the migration source environment, the reporting processing time at the time of sequential execution is 100 milliseconds/report, so that the processing can be achieved with ten multiples. As a result, the processing time per report at parallel execution is 100/10 = 10 milliseconds. In contrast, referring to the reporting service performance information 62a in the performance information DB 23 of FIG. 13, the performance of reporting processing after migration is that the report output time of API of Japan DC1 in Region is 120 milliseconds/report, so that five multiple executions are possible. As a result, the processing time per report at parallel execution is 120/5 = 24 milliseconds. As a result, the overhead due to the performance difference of the report output time (overhead of API) is 14 milliseconds/report.

In this way, in the case where the functions of the system of the migration source include reporting, it is assumed that the function after migration includes reporting. A provision format of reporting processing time or the like is specified, and the processing information input in the input-item area 60n for the migration source information and the reporting service performance information 62a are compared to calculate the performance difference of functions.

Next, an example of calculating the functional difference of DB will be described. As illustrated in FIG. 16, in the migration source environment, 5-MB DB reading to the screen occurs, whose throughput is 3 Gbps (= (3 x 1,000/8) MB/s). Therefore, the delay time that occurs due to the display of one Web screen can be calculated as 5/(3 x 1,000/8) = 0.013 (seconds), which is equivalent to 13 milliseconds. In contrast, in the DB after migration, referring to the inter-service communication performance information 62b in the performance information DB 23 in FIG. 13, the throughput in the case where the region of the communication source and the communication destination is Japan DC1, the communication source service is IaaS, and the communication destination service is DB is 1,000 Mbps. Therefore the delay time that occurs at the display of one Web screen can be calculated as 5/(1 × 1,000/8) = 0.039 (seconds), which is equivalent to 39 milliseconds. As a result, the overhead due to the performance difference in delay time that occurs in displaying one Web screen of DB (overhead of communication between services) is 26 milliseconds.

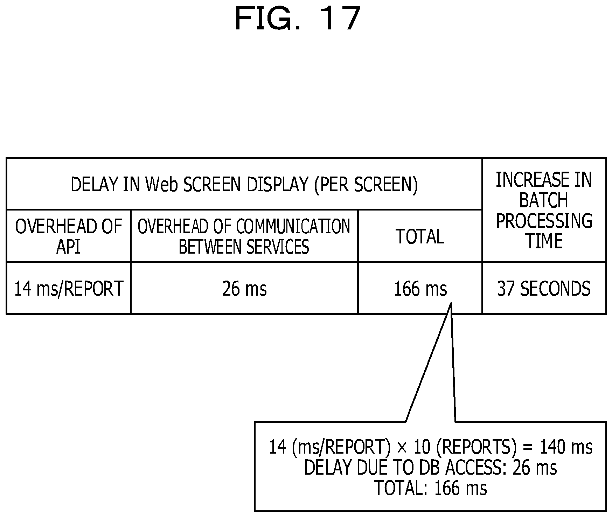

Next, an example of calculating the performance difference of batch function will be described. As illustrated in FIG. 16, assuming that an average of 5-GB data transfer occurs during batch processing in the migration source environment, its throughput is 3 Gbps(= (3/8) GB/s). Therefore, the increase in batch processing time due to communication with DB can be calculated as 5/(3/8) = 13 (seconds). In contrast, in the DB after migration, referring to the inter-service communication performance information 62b in the performance information DB 23 of FIG. 13, the throughput in the case where the region of the communication source and the communication destination is Japan DC1, the communication source service is batch, and the communication destination service is DB is 800 Mbps. Therefore, the increase in batch processing time due to communication with the DB can be calculated as 5/(0.8/8) = 50 (seconds). As a result, the overhead of the performance difference when the batch processing time is increased due to communication with the DB is 37 seconds. As illustrated in FIG. 17, the delay of Web screen display per screen can be calculated from the overhead of API and the overhead of communication between the serviced. The delay of Web screen display per screen in FIG. 17 is 14 milliseconds x 10 (the average number of reports per screen) + 26 milliseconds, 166 milliseconds in total. In addition to this, batch processing time increases by 37 seconds.

When a plurality of functions are present, the throughput of network performance between servers input in the input-item area 60d of the migration source information and the throughput of the inter-service communication performance information 62b, which indicates the linkage state after migration, are compared to calculate the performance difference of functions.

Next, an example of calculation of cost will be described. In the simulation, for the reform cost, the record of the middleware migration cost 64a in the migration information DB 24a of FIG. 14 in which the size of the source code of the function matches is referred to. For the operation cost, the record of the cloud service usage fee 64b in the catalog information DB 24b of FIG. 15 in which the number of cores of the CPU and the memory capacity match is referred to. If there is no record for the reform cost in which the size of the source code of the function matches, the man-hours of two records of sizes close to the input size may be estimated for use.

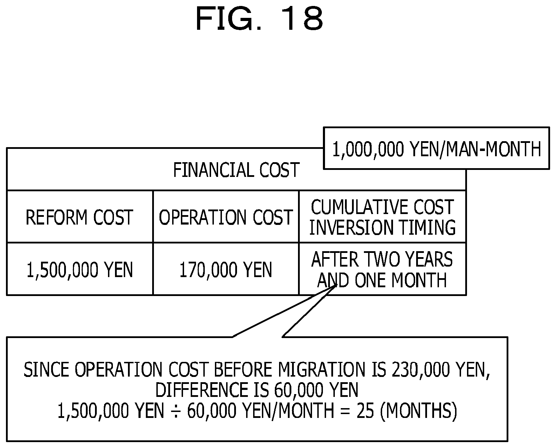

As illustrated in FIG. 16, in the migration source environment, the size of the source code of mysql is 5 KS, and the monthly average operation cost is 230,000 yen. Referring to the record whose middleware migration cost 64a in the migration information DB 24a in FIG. 14 in which the size matches, man-hours for reform in the case where the DB before migration is mysql and the size is 5 KS is 1.5 man-month. Of the functions other than the DB, Web and AP is not reformed because it is simple migration to IaaS, and batch and reporting is not also reformed because there is no change in middleware although it is migration to PaaS. If one man-month takes 1,000,000 yen, the reform cost will be 1.500,000 yen. Referring to the records of the cloud service usage fee 64b in the catalog information DB 24b of FIG. 15 in which the number of cores of the CPU and the memory capacity match, the operation cost (monthly cost + operation man-hours) per month is 45,000 yen + 0.03 (man-month) × 10,000 yen for Providing Virtual Machine of IaaS, 25,000 yen + 0.005 (man-month) × 10,000 yen for reporting, 25,000 + 0.005 (man-month) × 10,000 yen for batch, and 30,000 yen + 0.005 (man-month) × 10,000 yen for DB, so that 125,000 yen + 45,000 yen = 170,000 yen. FIG. 18 illustrates financial costs including a reform cost, an operation cost, and cumulative cost inversion timing. Since the monthly average operation cost before migration is 230,000 yen, the reform cost 1,500,000 is divided by 60,000 yen (the difference). Thus, the cumulative cost inversion timing is calculated as after 25 months = two years and one month.

A case where the configuration before migration is the same as that of the above calculation example, and the functional combination after migration differs will be described. In the case where the functions of Web, AP, and batch are provided by the IaaS server, and the functions of reporting and DB are provided as PaaS services, the following differs from the above calculation example. In other words, the communication source service is IaaS, and the communication destination service is DB. In this case, an increase in batch processing time for communication with DB can be calculated as 5/(1/8) = 40 (seconds). As a result, the overhead of the performance difference in the increase in batch processing time due to the communication with DB is 27 seconds. For the cost, the operation cost of the function of batch may be calculated as 45,000 yen + 0.03 (man-month) × 10,000 yen in the item of Providing Virtual Machine.

The providing unit 26 merges the performance difference calculated by the simulation unit 25 for each combination of functions and the cost calculated for each combination of the functions and provides the result to the client terminal 10.

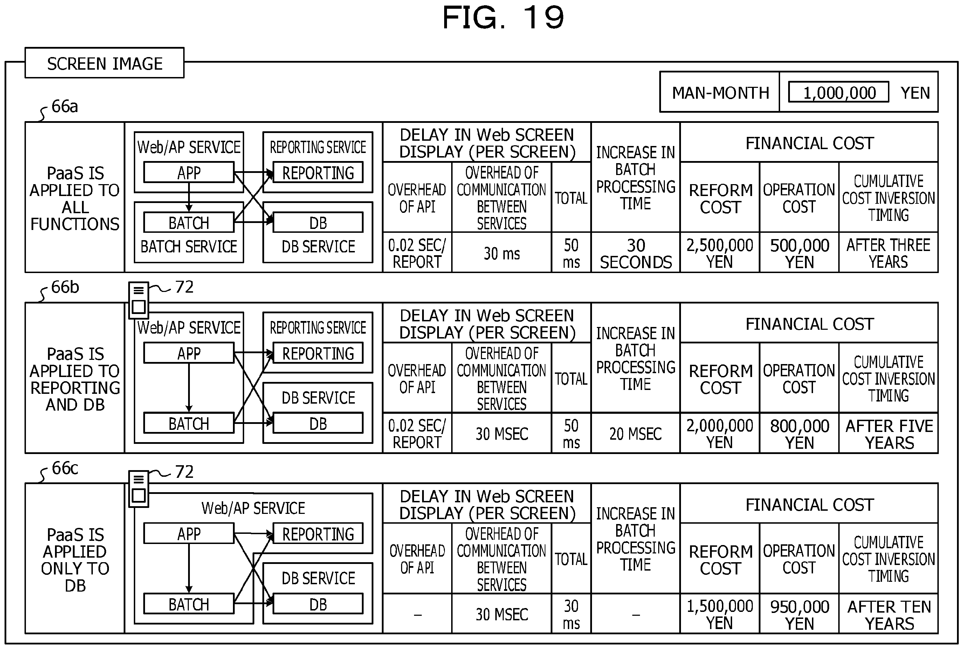

FIG. 19 illustrates an example of a screen image of the simulation result provided to the client terminal 10. FIG. 19 illustrates an example of three variations of a combination of functions: a case 66a in which PaaS is applied to all functions, a case 66b in which PaaS is applied to the functions of reporting and DB, and a case 66c in which PaaS is applied only to the function of DB, which illustrates the calculated functional difference and the calculated cost for each of the three variations of a combination of functions. FIG. 19 illustrates a delay in Web screen display per screen, an increase in batch processing time, and financial cost for each variation of a combination of functions. In the case 66b in which PaaS is applied to the function of reporting and DB and the case 66c in which PaaS is applied only to the function of DB, an icon 72 for identifying functions to be operated outside PaaS is displayed. In the case 66b in which PaaS is applied to the functions of reporting and DB, the icon 72 is added to the Web and AP server, so that it can be seen that the functions of the application and the batch in the Web and AP server are operated outside PaaS, for example, IaaS. In the case 66c in which PaaS is applied only to the function of DB, the icon 72 is added to the Web and AP server, so that it can be seen that the functions of the application, the batch, and reporting in the Web and AP server are operated outside PaaS, for example, IaaS. Since there may be nⁿ variations of a combination of functions when the number of functions is n, a case where PaaS is applied to the functions of reporting, batch, and DB may be included as in the calculation example of the simulation unit 25, described above.

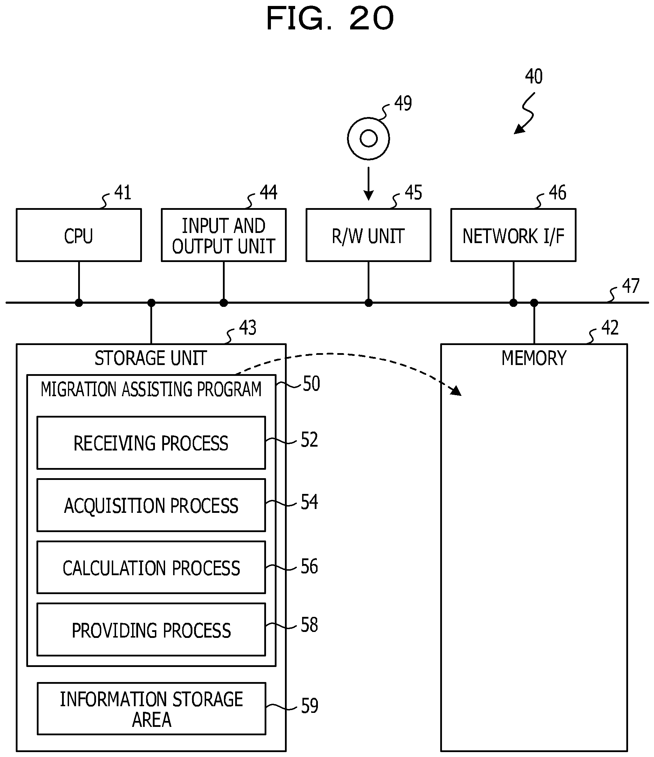

The platform migration assisting apparatus 20 can be implemented by, for example, a computer 40 illustrated in FIG. 20. The computer 40 includes a central processing unit (CPU) 41, a memory 42 serving as a temporary storage area, and a non-volatile storage unit 43. The computer 40 further includes an input and output unit 44, a read/write (R/W) unit 45 that controls reading and writing data from/to the storage medium 49, and a communication interface (I/F) 46 connected to a network, such as the Internet. The CPU 41, the memory 42, the storage unit 43, the input and output unit 44, the R/W unit 45, and the communication I/F 46 are connected to one another via a bus 47.

The storage unit 43 can be implemented by a hard disk drive (HDD), a solid state drive (SSD), a flash memory, or the like. The storage unit 43 serving as a storage medium stores a migration assisting program 50 for causing the computer 40 to function as the platform migration assisting apparatus 20. The migration assisting program 50 includes a reception process 52, an acquisition process 54, a calculation process 56, and a providing process 58. The storage unit 43 includes an information storage area 59 in which the performance information DB 23, the migration information DB 24a, and the catalog information DB 24b are stored.

The CPU 41 reads the migration assisting program 50 from the storage unit 43 and expands it in the memory 42 to sequentially execute the processes of the migration assisting program 50. The CPU 41 operates as the receiving unit 21 illustrated in FIG. 4 by executing the reception process 52. The CPU 41 operates as the acquisition unit 22 illustrated in FIG. 4 by executing the acquisition process 54. The CPU 41 operates as the simulation unit 25 illustrated in FIG. 4 by executing the calculation process 56. The CPU 41 operates as the providing unit 26 illustrated in FIG. 4 by executing the providing process 58. The CPU 41 reads information from the information storage area 70 and expands the contents in the performance information DB 23, the migration information DB 24a, and the catalog information DB 24b into the memory 42. This causes the computer 40 executing the migration assisting program 50 to function as the platform migration assisting apparatus 20. The CPU 41 that executes the program is hardware.

The functions implemented by the migration assisting program 50 can also be implemented by, for example, a semiconductor integrated circuit, more specifically, an application specific integrated circuit (ASIC).

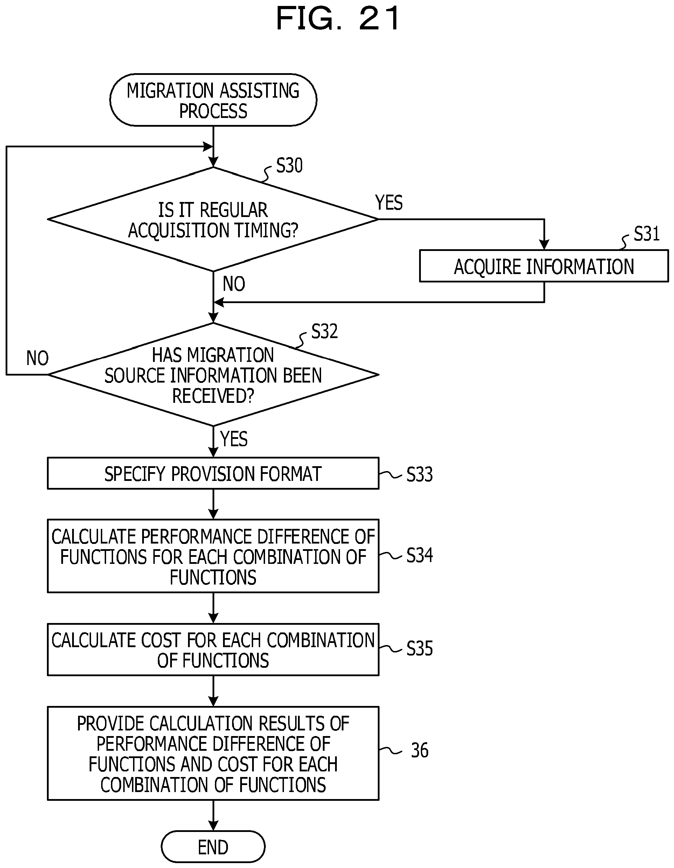

Next, the operation of the platform migration assist system 100 according to the present embodiment will be described. Referring to the flowchart in FIG. 21, exchange of information among the processing units will be described.

First, at step S30, the acquisition unit 22 determines whether it is the timing of regular acquisition. If it is the timing of regular acquisition, the process goes to step S31, and if it is not the timing of regular acquisition, the process goes to step S32.

At step S31, the acquisition unit 22 acquires reporting service performance information and inter-service communication performance from the cloud environments 30 and stores the information as the reporting service performance information 62a and the inter-service communication performance information 62b in the performance information DB 23 illustrated in FIG. 13. The acquisition unit 22 also acquires middleware migration cost and cloud service usage fee from the cloud environments 30. The acquired information is stored as the middleware migration cost 64a in the migration information DB 24a illustrated in FIG. 14 and the cloud service usage fee 64b in the catalog information DB 24b illustrated in FIG. 15.

At step S32, it is determined whether migration source information is received from the client terminal 10. If it is received, the process goes to step S33, and if is not received, the process returns to step S30, and the process is repeated.

At step S33, the simulation unit 25 specifies a function provision format of the migration source based on the migration source information received at step S32 and the reporting service performance information 62a and the inter-service communication performance information 62b in the performance information DB 23. The simulation unit 25 also specifies a function provision format after migration.

At step S34, the simulation unit 25 calculates the performance difference of functions for each combination of functions based on the function provision format specified at step S33 and the difference in linkage state of the functions.

At step S35, the simulation unit 25 calculates a cost for each combination of functions.

At step S36, the providing unit 26 merges the performance difference of functions calculated for each combination of functions at step S34 and the cost calculated for each combination of functions at step S35. The providing unit 26 displays the icon 72 for identifying functions to be operated outside PaaS on the merged simulation result and provides it to the client terminal 10.

As described above, the platform migration assist system 100 according to the present embodiment receives migration source information on the migration source system and specifies its function provision format. The platform migration assist system 100 calculates the performance difference of functions for each combination of functions, calculates the cost for each combination of functions, and provides the results to the client terminal 10. Thus, the system 100 can assist migration to a platform in a cloud environment.

With the platform migration assist system 100 according to the present embodiment, the providing unit 26 displays the icon 72 for identifying functions to be operated outside PaaS on the merged simulation result for provision to the client terminal 10. This assists migration to a platform in a cloud environment by the visually easy-to-understand display.

The above embodiment has been described using an example in which both of overhead of API and overhead of communication between services are calculated for provision, but this is given for illustrative purpose only. For example, either of the overhead of API and the overhead of communication between service may be calculated and provided.

The above embodiment has been described using an example in which both of the performance difference of functions and the cost are calculated and provided as simulation results. This is given for illustration purpose only. Either one of the performance difference of functions and the cost may be provided.

In the above embodiment, the overhead of API for reporting of the functions of the API providing service is calculated. In contrast, the overhead of the Web, AP, batch, and DB of the infrastructure providing service is not calculated, but this is given for illustration purpose only and is not intended to limit the disclosure. For example, the respective performance information tables for the Web, AP, batch, and DB may be provided in the performance information DB 23 so that more detailed overheads can be calculated for the infrastructure providing services.

The functions dealt with in the above embodiment are Web, AP, batch, and DB in the infrastructure providing service, and reporting in the API providing service. This is given for illustrative purpose only, and other functions may be dealt with. For example, in the case of API providing services, the function of map search or voice operation may be dealt with. In the case of infrastructure providing services, functions in which applications can be executed in a container format, such as a container service, may be dealt with.

### [Reference Signs List]

- 10: CLIENT TERMINAL
- 15: NETWORK
- 20: PLATFORM MIGRATION ASSISTING APPARATUS
- 21: RECEIVING UNIT
- 22: ACQUISITION UNIT
- 23: PERFORMANCE INFORMATION DB
- 24a: MIGRATION INFORMATION DB
- 24b: CATALOG INFORMATION DB
- 25: SIMULATION UNIT
- 26: PROVIDING UNIT
- 30: CLOUD ENVIRONMENT
- 40: COMPUTER
- 41: CPU
- 42: MEMORY
- 43: STORAGE UNIT
- 49: STORAGE MEDIUM
- 50: MIGRATION ASSISTING PROGRAM
- 100: PLATFORM MIGRATION ASSIST SYSTEM

## Claims

1. A method executed by a computer, the method comprising:
receiving first information that indicates a plurality of functions provided in a first computing system when the plurality of functions are migrated from the first computing system to a second computing system;
specifying a first linkage state of the plurality of functions in the first computing system and a first provision format of the plurality of functions in the first computing system;
specifying a second linkage state of the plurality of functions in the second computing system and a second provision format of the plurality of functions in the second computing system;
specifying a first performance determined based on the first linkage state, the first performance being performance of the plurality of functions in the first computing system;
specifying a second performance determined based on the second linkage state, the second performance being performance of the plurality of functions in the second computing system;
determining a first difference between the first performance and the second performance;
specifying a third performance determined based on the first provision format, the third performance being performance of the plurality of functions in the first computing system;
specifying a fourth performance determined based on the second provision format, the fourth performance being performance of the plurality of functions in the second computing system;
determining a second difference between the third performance and the fourth performance; and
outputting at least one of the first difference and the second difference.

2. The method according to claim 1, further comprising:
specifying a first cost of each of the plurality of functions in the first computing system and a second cost of each of the plurality of functions in the second computing system;
specifying a third difference between the first cost and the second cost; and
outputting the third difference.

3. The method according to claim 1, further comprising:
receiving second information that specifies first middleware for use in the first computing system and a length of a source code for use in the first middleware;
specifying a third cost for reforming the source code when second middleware for use in the second computing system differs from the first middleware; and
outputting the third cost.

4. The method according to claim 1, wherein
the first difference is specified for each combination of the plurality of functions to be migrated to the second computing system.

5. The method according to claim 1, further comprising:
when a first function of the plurality of functions is migrated to Platform as a Service (PaaS) in the second computing system, discriminably displaying and outputting the first function to be migrated to the PaaS and a second function to be operated outside the PaaS.

6. An information processing apparatus comprising:
a memory; and
a processor coupled to the memory and configured to:
receive first information that indicates a plurality of functions provided in a first computing system when the plurality of functions are migrated from the first computing system to a second computing system,
specify a first linkage state of the plurality of functions in the first computing system and a first provision format of the plurality of functions in the first computing system,
specify a second linkage state of the plurality of functions in the second computing system and a second provision format of the plurality of functions in the second computing system,
specify a first performance determined based on the first linkage state, the first performance being performance of the plurality of functions in the first computing system,
specify a second performance determined based on the second linkage state, the second performance being performance of the plurality of functions in the second computing system,
determining a first difference between the first performance and the second performance,
specify a third performance determined based on the first provision format, the third performance being performance of the plurality of functions in the first computing system,
specify a fourth performance determined based on the second provision format, the fourth performance being performance of the plurality of functions in the second computing system,
determin a second difference between the third performance and the fourth performance, and
output at least one of the first difference and the second difference.

7. The information processing apparatus according to claim 6, wherein the processor is configured to:
specify a first cost of each of the plurality of functions in the first computing system and a second cost of each of the plurality of functions in the second computing system,
specify a third difference between the first cost and the second cost, and
output the third difference.

8. The information processing apparatus according to claim 6, wherein the processor is configured to:
receiv second information that specifies first middleware for use in the first computing system and a length of a source code for use in the first middleware,
specify a third cost for reforming the source code when second middleware for use in the second computing system differs from the first middleware, and
output the third cost.

9. The information processing apparatus according to claim 6, wherein the first difference is specified for each combination of the plurality of functions to be migrated to the second computing system.

10. The information processing apparatus according to claim 6, wherein the processor is configured to:
when a first function of the plurality of functions is migrated to Platform as a Service (PaaS) in the second computing system, discriminably display and outputting the first function to be migrated to the PaaS and a second function to be operated outside the PaaS.

11. A non-transitory computer-readable storage medium storing a program that causes an information processing apparatus to execute a process, the process comprising:
receiving first information that indicates a plurality of functions provided in a first computing system when the plurality of functions are migrated from the first computing system to a second computing system;
specifying a first linkage state of the plurality of functions in the first computing system and a first provision format of the plurality of functions in the first computing system;
specifying a second linkage state of the plurality of functions in the second computing system and a second provision format of the plurality of functions in the second computing system;
specifying a first performance determined based on the first linkage state, the first performance being performance of the plurality of functions in the first computing system;
specifying a second performance determined based on the second linkage state, the second performance being performance of the plurality of functions in the second computing system;
determining a first difference between the first performance and the second performance;
specifying a third performance determined based on the first provision format, the third performance being performance of the plurality of functions in the first computing system;
specifying a fourth performance determined based on the second provision format, the fourth performance being performance of the plurality of functions in the second computing system;
determining a second difference between the third performance and the fourth performance; and
outputting at least one of the first difference and the second difference.

12. The non-transitory computer-readable storage medium according to claim 11, the process further comprising:
specifying a first cost of each of the plurality of functions in the first computing system and a second cost of each of the plurality of functions in the second computing system;
specifying a third difference between the first cost and the second cost; and
outputting the third difference.

13. The non-transitory computer-readable storage medium according to claim 11, the process further comprising:
receiving second information that specifies first middleware for use in the first computing system and a length of a source code for use in the first middleware;
specifying a third cost for reforming the source code when second middleware for use in the second computing system differs from the first middleware; and
outputting the third cost.

14. The non-transitory computer-readable storage medium according to claim 11, wherein
the first difference is specified for each combination of the plurality of functions to be migrated to the second computing system.

15. The non-transitory computer-readable storage medium according to claim 11, further comprising:
when a first function of the plurality of functions is migrated to Platform as a Service (PaaS) in the second computing system, discriminably displaying and outputting the first function to be migrated to the PaaS and a second function to be operated outside the PaaS.
